# EUROPEAN PATENT SPECIFICATION

(11) **EP 4 241 364 B1**
(45) Date of publication and mention of the grant of the patent: **23.10.2024**
(21) Application number: 21805884.0
(22) Date of filing: 01.11.2021
(51) Int. Cl.: H02J 50/40, H02J 50/12, H02J 50/00

(54) **A COIL STRUCTURE FOR IMPEDANCE MATCHING IN A WIRELESS POWER TRANSFER SYSTEM**
SPULENSTRUKTUR ZUR IMPEDANZANPASSUNG IN EINEM SYSTEM ZUR DRAHTLOSEN STROMÜBERTRAGUNG
STRUCTURE DE BOBINE POUR ADAPTATION D'IMPEDANCE DANS UN SYSTÈME DE TRANSMISSION DE PUISSANCE SANS FIL

(30) Priority: 03.11.2020 NO 20201197
(43) Date of publication of application: 13.09.2023
(73) Proprietor: University of South-Eastern Norway, 3603 Kongsberg (NO)
(72) Inventor: AZADMEHR, Mehdi, 3182 Horten (NO); ZHAKSYLYK, Yelzhas, 1050 Ixelles (BE)
(74) Representative: Bryn Aarflot AS
(86) International application number: PCT/EP2021/080237
(87) International publication number: WO 2022/096407

(56) References cited:
- US-A1- 2012 139 358
- US-A1- 2017 237 292
- ZHAKSYLYK YELZHAS ET AL: "Design of a switchable driving coil for Magnetic Resonance Wireless Power Transfer", 2019 IEEE PELS WORKSHOP ON EMERGING TECHNOLOGIES: WIRELESS POWER TRANSFER (WOW), IEEE, 18 June 2019 (2019-06-18), pages 249 - 252, XP033738728, DOI: 10.1109/WOW45936.2019.9030674
- QIU HAO ET AL: "Digital Transmitter Coil for Wireless Power Transfer Robust Against Variation of Distance and Lateral Misalignment", IEEE TRANSACTIONS ON MICROWAVE THEORY AND TECHNIQUES, IEEE, USA, vol. 68, no. 9, 1 September 2020 (2020-09-01), pages 4031 - 4039, XP011807070, ISSN: 0018-9480, [retrieved on 20200902], DOI: 10.1109/TMTT.2020.2990976

## Description

Wireless charging has become increasingly popular the recent years, most know for charging mobile phones and smaller home appliance, but also for other uses. A common solution in the known arts uses magnetic resonant wireless power transfer (MRWPT) system. However, MRWPT systems are highly sensitive to distance changes and misalignments between transmitter and receiver coils which causes an impedance mismatch between the coupled coils. An effective impedance matching network (IMN) can solve the mismatch problem.

A large number of different IMN circuits are known for WPT systems, as shown in references [1] - [16]. Most of them use a capacitive matching technique, which includes capacitor matrices, variable capacitors, or a sequence of predefined capacitors in L-, T-, or Pi- matching circuitry [1] - [5]. Another method is the inductive IMN, where several coils are placed in proximity of the transmitter or receiver coils for the impedance matching purpose. These coils can be regarded as a multi-loop transformer with several inputs and a single output [6]-[8]. The working principle resembles the four-coil magnetic resonance WPT system presented by the MIT group in 2007 [9]. This system consists of two or more high-Q resonator coil, which are driven by a low-Q coil connected to the power source. The load is also connected to a low-Q coil. The coupling between the resonator and the driving coil (or the load coil) can be considered as part of a matching network, where the tuning of the impedance can be achieved by changing the coupling between them. This method was referred to as inductive IMN in reference [10], where switchable driving coils are placed on the backside and a high-Q transmitter coil is placed on front-side of the same PCB. In that work, it is demonstrated that coupling between high-Q and low-Q coils varies linearly and therefore, it can be used as inductive IMN. The IEEE article "Design of a switchable driving coil for Magnetic Resonance Wireless Power Transfer" by Zhaksylyk Y et al. (2019 PELS, XP033738728) discloses a switchable multi-turn planar coil for wireless power and suggests that the switchable coils may be of the spiral shaped type. However primary and secondary coils are not placed on the same plane but on opposite sides of an insulating layer, such as a two-sided PCB.

The object of the present invention is to improve the impedance matching of WPT systems. This is obtained as specified in the accompanying claims.

More specifically the object is obtained using interspiraled switchable coils for inductive impedance matching network (IMN) of magnetic resonance wireless power transfer (WPT). Switching between different values of inductance can be used for compensation of distance changes and misalignment between transmitter and receiver coils in Wireless Power Transfer (WPT) systems.

The preferred embodiment of invention thus relates to an interspiraled switchable inductor system, which can be modelled as a multi-coil magnetic resonance WPT system with multiple driving coils and load coil. The selection of different driving and load coils can be used to compensate distance changes and misalignments between resonator coils. Each interspiraled coils can be selected using switches controlled by a control system. Both the interspiraled coils and the resonator coil can be placed one side of PCB, therefore, it is more compact.

The present invention will be described below referring to the accompanying drawings, illustrating the invention by way of examples.
- Fig. 1: illustrates the coil structure of the preferred embodiment of the invention with interspiraled coils and spiral shaped resonator coil.
- Fig. 2: illustrates the circuitry related to the interspiraled coils and spiral shaped resonator coil connected to the power supply or load with selectable switches.
- Fig. 3: illustrates a circuit representation of the interspiraled coils and spiral shaped resonator coil.
- Fig. 4: illustrates an example of use related to an electric autonomous submarine wireless charging station.
- Fig. 5: illustrates an example of use related to an electric car wireless charging station.
- Fig. 6: illustrates an example of use related to an electric device wireless charging station.
- Fig. 7: illustrates the dependency of power transfer to distance using different coils.

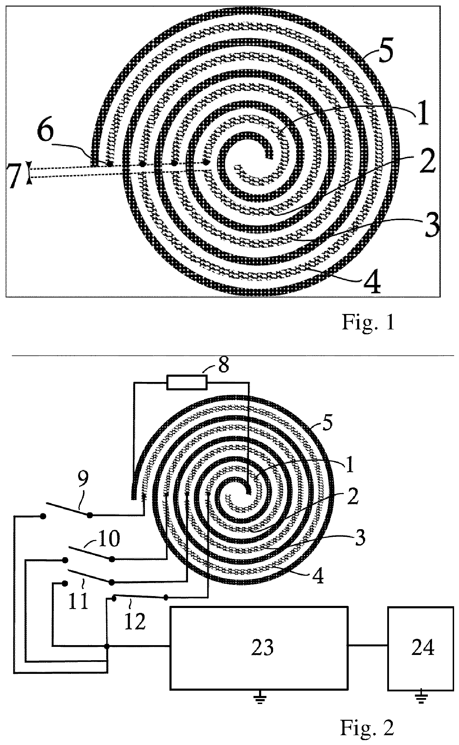

The PCB view of the coil structure is shown in Fig. 1. The different single loop driving coils 1,2,3,4 are placed between the turns of the spiral-shaped multi-turn resonator (transmitter/receiver) coil 5. 6 are via connections to the backside of PCB, 7 is a gap between the interspiraled coils 1,2,3,4. The interspiraled coils thus represent different inductances and will provide resonance under different conditions, such as changing distance from the device to be charged.

As all the coils are placed on one side of a PCB, backside of PCB can be used for other necessary electronic circuitry such as the control system, amplifier and their connections. Therefore, the system becomes more compact.

The interspiraled switchable coils can be modelled in the same way as a four-coil magnetic resonance WPT system, but with multiple driving coils. Selecting the different single loop coils results in different mutual inductances which can again be used for compensation of distance changes and misalignment between resonators. Each driving loop can be selected using switches controlled by a control system
Fig. 2 illustrates connections of interspiraled coils 1,2,3,4 to the tuning control system 23 and power supply or battery 23. The interspiraled coils 1,2,3,4 will be activated and disabled through switches 9,10,11,12. Switches can be MOSFET transistors or relays.

The interspiraled switchable coils illustrated in figure 2 consists of four single turn coils with increasing radius, each numbered from 1 to 4 as shown in the figure. Mosfet transistors or relays can be used to connect the power source to the different driving coils. Basic working principle of such a system is well explained in reference [8].

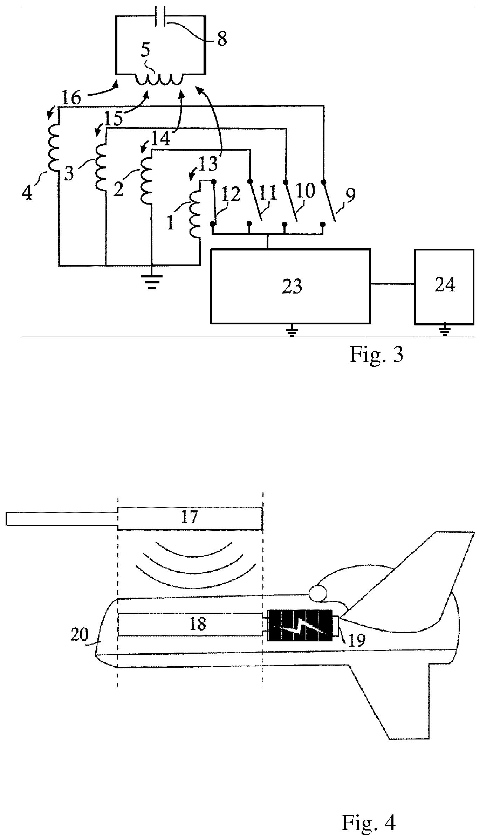

Fig. 3 illustrates a schematic view of that connections and mutual inductances 13,14,15,16 representation. As it can be seen from Fig. 3 the spiral-shaped resonator coil 5 and each driving coil 1,2,3,4 are mutually coupled, the mutual inductances are labelled from 13 to 16 in the figure relative to the resonator coil 5. The resonator coil 5 is connected to a chosen capacitor 8 so a predetermined resonance frequency at an ISM band can be achieved.

Fig. 4 shows an application for use of a system according to the invention including drone, e.g. an electric-autonomous submarine, 20 charging station, which consists of Transmitter 17 and built-in receiver 18 on the boat. Both transmitter 17 and receiver 18 includes identical coil structures as illustrated above with only difference that transmitter 17 is connected to the power supply and receiver 18 has connection to the load. Receiver is connected to the load, i.e. battery 19. Each of the transmitter 17 and receiver 18 contains a coil system as illustrated in Fig. 2. The charging unit 17 containing a transmitter coil, as shown in figure 2 is placed in a distance of 10 cm from the drone. A power receiver unit 18 containing the proposed coil as shown in figure 2, is placed inside the drone directed toward the transmitter unit. The transmitted power is being used to charge the battery 19 inside the drone. If the distance changes, the system automatically optimizes the power transferred by changing the driving coils in the proposed system. If the distance is decreased, a smaller coil is selected and if the distance decreases, a larger coil is selected.

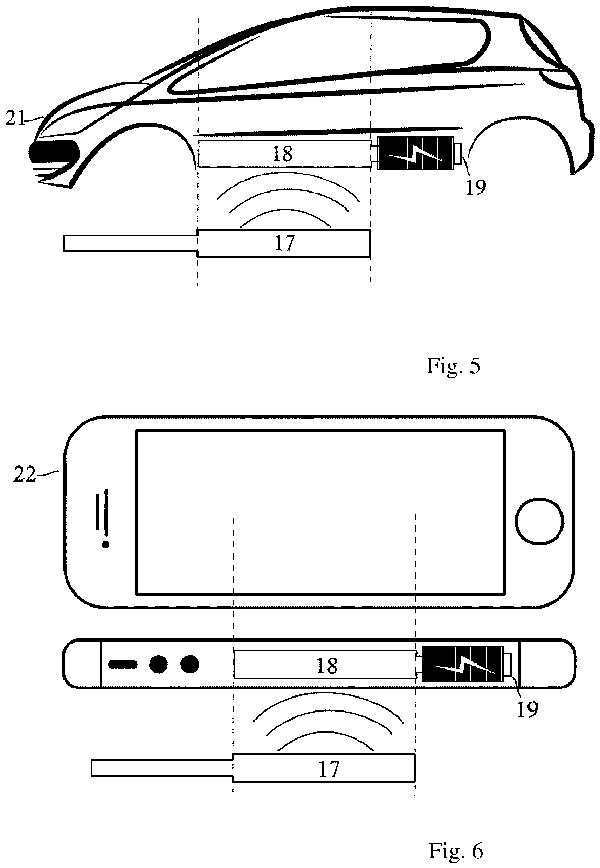

Other uses may also be contemplated such as charging electrical cars or electronic devices, wherein the dimensions and distances will depend on the use. For example Figure 5 shows a vehicle 21 which is charged by the proposed system. The charging unit 17 containing a transmitter coil, as shown in figure 2, is placed in a distance of 20-40 cm from the vehicle. A power receiver unit 18 containing the proposed coil as shown in figure 2, is placed inside the vehicle directed toward the transmitter unit. Figure 6 shows a mobile phone 22 which is charged by the proposed system. The charging unit 17 containing a transmitter coil as shown in figure 2 may be placed under a table, and mobile phone is placed in a distance of 4 cm from the power transmitter. The sizes and other characteristics will be adjusted according to these uses.

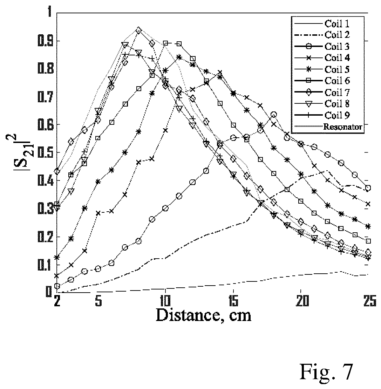

Fig.7 exemplifies a measure of the square magnitudes of the measured transmission coefficient parameters as function of the distance between transmission and receiver resonator at 5.3 MHz using a resonator coil 5 at approximately 10cm and nine interspiraled coils. The measurement shows that we can achieve an active matching for distance changes from 7 cm to 25 cm with 1 cm steps from 2 to 25cm.

The tuning controller 23 in the receiver 17 or transmitter 18 will preferably switch both coil structures to match the signal of each other but under certain conditions it may be contemplated that only switch one, thus providing two non-identical characteristics for the two coils.

To summarize the present invention thus relates to a multiturn coil antenna for transmitting or receiving wireless power in a wireless power transfer system. The coil structure includes a plane multiturn primary conductor coil and at least two secondary conductor coils positioned in the plane defined by the primary coil and being placed between the turns of the multiturn primary coil, thus having a spiral shape relative to the same center. The secondary coils have different diameters and lengths therefore provide different inductance and are also shorter than the primary coil. Each secondary coil is connected to a switch configured to be controlled by a tuning controller for individually connecting and disconnecting the coil to a battery for receiving said power, e.g. for charging, or to a power supply, thus either transmitting or receiving radiation within a predetermined frequency range.

According to an embodiment of the invention the two or more secondary coils can be connected in series or parallel may alsoe be configured to be connected in series or in parallel to increase the number of possibilities and different resonance properties.

Preferably each of the secondary coils extend one turn around the common coil centers, and the primary coil is at each end connected to an impedance, thus providing a resonator.

The coils may be positioned on a surface of insulating material, possibly covered by another insulating layer, or may be implemented inside a suitable material.

The present invention also relates to a wireless power transfer system including two coil preferably identical antennas as discussed above, one in the transmitter and one in the receiver. The first being connected to a power supply and the second being connected to drive a load or a battery to be charged with said power. Thus, when positioned in a position relative to each other the transmitted power from one antenna may be received by the other, and by selecting the secondary coils an optimized coupling between the two may be achieved.

Preferably, to achieve this at least one tuning controller includes a sensing circuit for sensing resonance quality at each of said coil antennas and switching between the secondary antennas until the best matched impedance is achieved.

The tuning control of the receiver and transmitter antenna may be configured to choose the secondary coil providing the highest power reception and/or the transmitter and receiver is provided with a wireless communication means so as to choose the antenna configuration at both the transmitter and receiver providing the highest transfer efficiency.

Several uses of the deice according to the invention may be contemplates, such as where a first of said antennas are connected to a power supply located in a stationary installation at a ground level and the second of said antennas is located in a moving vehicle, such as a car, and connected to a chargeable battery, the second antenna being positioned in the vehicle at a predetermined height above the ground level.

Another embodiment is related to submarine vessels where a first of said antennas are connected to a power supply located in a stationary submarine installation and the second of said antennas is located in an electrically operated submarine vessel and connected to a chargeable battery in the vessel, the vessel being configured to move into a position at a predetermined position relative to the first antenna.

A third embodiment is related to charging mobile devices where a first of said antennas are connected to a power supply located in a stationary installation and the second of said antennas is located in a mobile electronic device and being connected to a chargeable battery in the device, the installation including a surface for placing the device in a predetermined position relative to the first antenna.

### References

[1] O. Abdelatty, X. Wang and A. Mortazawi, "Position-Insensitive Wireless Power Transfer Based on Nonlinear Resonant Circuits," in IEEE Transactions on Microwave Theory and Techniques, vol. 67, no. 9, pp. 3844-3855, Sept. 2019. doi: 10.1109/TMTT.2019.2904233
[2] B. K. Eplett, "On-chip impedance matching using a variable capacitor", U.S. Patent 2008/0211598 A1, Sep. 04, 2008.
[3] W. Lee, H. Lee, K. Oh, and J. Yu, "Switchable distance-based impedance matching networks for a tunable HF system", Progr. Electromagn. Res., vol. 128, pp. 19-34, 2012.
[4] Y. Lim, H. Tang, S. Lim and J. Park, "An Adaptive Impedance-Matching Network Based on a Novel Capacitor Matrix for Wireless Power Transfer", in IEEE Transactions on Power Electronics, vol. 29, no. 8, pp. 4403-4413, Aug. 2014.
[5] J. Kim, D. H. Kim and Y. J. Park, "Analysis of Capacitive Impedance Matching Networks for Simultaneous Wireless Power Transfer to Multiple Devices", in IEEE Transactions on Industrial Electronics, vol. 62, no. 5, pp. 2807-2813, May 2015.
[6] P. Park, C. S. Kim, M. Y. Park, S. D. Kim and H. K. Yu, "Variable inductance multilayer inductor with MOSFET switch control," in IEEE Electron Device Letters, vol. 25, no. 3, pp. 144-146, March 2004.
[7] B. Park and J. Lee, "Adaptive Impedance Matching of Wireless Power Transmission Using Multi-Loop Feed With Single Operating Frequency," in IEEE Transactions on Antennas and Propagation, vol. 62, no. 5, pp. 2851-2856, May 2014. doi: 10.1109/TAP.2014.2307340
[8] Y. T. Song, J. J. Wang and X. M. Li, "Printed spiral coils with multiloop technique for planar magnetically coupled resonant wireless power transfer system," 2018 IEEE MTT-S International Wireless Symposium (IWS), Chengdu, 2018, pp. 1-3. doi: 10.1109/IEEE-IWS.2018.8400960
[9] A. Kurs, "Power transfer through strongly coupled resonances, Massachusetts Institute of Technology", Master Thesis, 2007.
[10] Y. Zhaksylyk, U. Hanke, M. Azadmehr, "Design of a switchable driving coil for Magnetic Resonance Wireless Power Transfer", IEEE PELS Workshop on Emerging Technologies: Wireless Power, 2019.
[11] US2016/0380469
[12] US2015/0255987
[13] WO2019/148070
[14] WO2020/167245
[15] US4087821
[16] US5619218

## Claims

1. A multiturn coil antenna for transmitting or receiving wireless power in a wireless power transfer system, the coil structure including a plane multiturn spiral shaped primary conductor coil (5) and at least two secondary conductor coils (1-4) positioned in the plane defined by the primary coil and interspiraled between the turns of the multiturn primary coil on an insulating material, each of the secondary coils having different diameters and lengths providing different inductance and are shorter than the primary coil, wherein each secondary coils is connected to a switch (9-12) configured to be controlled by a tuning controller (23) for individually connecting and disconnecting the coil to a battery for receiving said power or to a power supply.

2. A multiturn coil antenna according to claim 1, wherein each of the secondary coils extend one turn around the common coil center.

3. A multiturn coil antenna according to claim 1, wherein the primary coil is at each end connected to an impedance (8), thus providing a resonator.

4. A multiturn coil antenna according to claim 1, wherein two or more of the secondary coils can be connected in series or parallel.

5. Wireless power transfer system including two coil antennas according to claim 1, the first being connected to a power supply and the second being connected to drive a load or a battery to be charged with said power.

6. Wireless power transfer system according to claim 5, wherein said at least one tuning controller includes a sensing circuit for sensing resonance quality at each of said coil antennas and switching between the secondary antennas until the best matched impedance is achieved.

7. Wireless power transfer system according to claim 6, wherein the tuning controller of the receiver and transmitter antenna is configured to choose the secondary coil providing the highest power reception.

8. Wireless power transfer system according to claim 6, wherein the transmitter and receiver is provided with a wireless communication means so as to choose the antenna configuration at both the transmitter and receiver providing the highest transfer efficiency.

9. Wireless power transfer system according to claim 5, wherein a first of said antennas are configured to be connected to a power supply located in a stationary installation at a ground level and the second of said antennas is configured to be located in a moving vehicle, such as a car, and connected to a chargeable battery, the second antenna being configured to be positioned in the vehicle at a predetermined height above the ground level.

10. Wireless power transfer system according to claim 5, wherein a first of said antennas are configured to be connected to a power supply located in a stationary submarine installation and the second of said antennas is configured to be located in a electrically operated submarine vessel and connected to a chargeable battery in the vessel, the vessel being configured to move into a position at a predetermined position relative to the first antenna.

11. Wireless power transfer system according to claim 5, wherein a first of said antennas are configured to be connected to a power supply located in a stationary installation and the second of said antennas is configured to be located in a mobile electronic device and being connected to a chargeable battery in the device, the installation including a surface for placing the device in a predetermined position relative to the first antenna.

## Patentansprüche

1. Mehrfachwicklungs-Spulenantenne zum Senden oder Empfangen von Drahtlosenergie in einem Drahtlosenergieübertragungssystem, wobei die Spulenstruktur eine ebene, spiralförmige Mehrfachwicklungs-Primärleiterspule (5) und mindestens zwei Sekundärleiterspulen (1-4) einschließt, die in der Ebene positioniert sind, die durch die Primärspule definiert und zwischen den Wicklungen der Mehrfachwicklungs-Primärspule auf einem Isoliermaterial spiralförmig angeordnet sind, wobei jede der Sekundärspulen unterschiedliche Durchmesser und Längen aufweist, die eine unterschiedliche Induktivität bereitstellen, und kürzer als die Primärspule ist, wobei jede Sekundärspule mit einem Schalter (9-12) angeschlossen ist, der konfiguriert ist, um durch einen Abstimmregler (23) gesteuert zu werden, zum einzelnen Anschließen und Trennen der Spule mit einer Batterie zum Empfangen der Energie oder mit einer Energieversorgung.

2. Mehrfachwicklungs-Spulenantenne nach Anspruch 1, wobei sich jede der Sekundärspulen um eine Wicklung um den gemeinsamen Spulenmittelpunkt herum erstreckt.

3. Mehrfachwicklungs-Spulenantenne nach Anspruch 1, wobei die Primärspule an jedem Ende mit einer Impedanz (8) angeschlossen ist und somit einen Resonator bereitstellt.

4. Mehrfachwicklungs-Spulenantenne nach Anspruch 1, wobei zwei oder mehr der Sekundärspulen in Reihe oder parallel geschaltet werden können.

5. Drahtlosenergieübertragungssystem, das zwei Spulenantennen nach Anspruch 1 einschließt, wobei die erste mit einer Energieversorgung angeschlossen ist und die zweite angeschlossen ist, um eine Last oder eine Batterie anzutreiben, die mit der Energie aufgeladen werden soll.

6. Drahtlosenergieübertragungssystem nach Anspruch 5, wobei der mindestens eine Abstimmregler eine Sensorschaltung zum Erfassen von Resonanzqualität an jeder der Spulenantennen und zum Umschalten zwischen den Sekundärantennen einschließt, bis die am besten angepasste Impedanz erreicht ist.

7. Drahtlosenergieübertragungssystem nach Anspruch 6, wobei der Abstimmregler der Empfänger- und Senderantenne konfiguriert ist, um die Sekundärspule auszuwählen, die den höchsten Energieempfang bereitstellt.

8. Drahtlosenergieübertragungssystem nach Anspruch 6, wobei der Sender und der Empfänger mit einem Drahtloskommunikationsmittel versehen sind, um sowohl an dem Sender als auch an dem Empfänger die Antennenkonfiguration auszuwählen, die die höchste Übertragungseffizienz bereitstellt.

9. Drahtlosenergieübertragungssystem nach Anspruch 5, wobei eine erste der Antennen konfiguriert ist, um an eine Energieversorgung angeschlossen zu werden, die sich in einer stationären Installation auf einem Bodenniveau befindet, und die zweite der Antennen konfiguriert ist, um sich in einem fahrenden Fahrzeug, wie etwa einem Auto, zu befinden und an eine aufladbare Batterie angeschlossen zu werden, wobei die zweite Antenne konfiguriert ist, um in dem Fahrzeug in einer zuvor bestimmten Höhe über dem Bodenniveau positioniert zu werden.

10. Drahtlosenergieübertragungssystem nach Anspruch 5, wobei eine erste der Antennen konfiguriert ist, um an eine Energieversorgung angeschlossen zu werden, die sich in einer stationären U-Boot-Installation befindet, und die zweite der Antennen konfiguriert ist, um sich in einem elektrisch betriebenen U-Boot-Schiff zu befinden und an eine aufladbare Batterie in dem Schiff angeschlossen zu werden, wobei das Schiff konfiguriert ist, um sich in eine Position an einer zuvor bestimmten Position relativ zu der ersten Antenne zu bewegen.

11. Drahtlosenergieübertragungssystem nach Anspruch 5, wobei eine erste der Antennen konfiguriert ist, um an eine Energieversorgung angeschlossen zu werden, die sich in einer stationären Installation befindet, und die zweite der Antennen konfiguriert ist, um sich in einer mobilen elektronischen Vorrichtung zu befinden und an eine aufladbare Batterie in der Vorrichtung angeschlossen zu werden, wobei die Installation eine Oberfläche zum Platzieren der Vorrichtungen in einer zuvor bestimmten Position relativ zu der ersten Antenne einschließt.

## Revendications

1. Antenne à bobines multitours destinée à transmettre ou recevoir une alimentation sans fil dans un système de transfert d'alimentation sans fil, la structure de la bobine comportant une bobine primaire (5) en forme de spirale multitours plane et au moins deux bobines secondaires (1-4) positionnées dans le plan défini par la bobine primaire et intercalées entre les spires de la bobine primaire multitours sur un matériau isolant, chacune des bobines secondaires a des diamètres et des longueurs différents fournissant une inductance différente et est plus courte que la bobine primaire, dans laquelle chaque bobine secondaire est connectée à un commutateur (9-12) configuré pour être commandé par un dispositif de commande de réglage (23) pour connecter et déconnecter individuellement la bobine à une batterie pour recevoir ladite alimentation ou à une alimentation électrique.

2. Antenne à bobines multitours selon la revendication 1, dans laquelle chacune des bobines secondaires s'étend sur un tour autour du centre de la bobine commune.

3. Antenne à bobines multitours selon la revendication 1, dans laquelle la bobine primaire est connectée à chaque extrémité à une impédance (8), fournissant ainsi un résonateur.

4. Antenne à bobines multitours selon la revendication 1, dans laquelle deux ou plusieurs des bobines secondaires peuvent être connectées en série ou en parallèle.

5. Système de transfert d'alimentation sans fil comportant deux antennes bobines selon la revendication 1, la première étant connectée à une alimentation électrique et la seconde étant connectée pour entraîner une charge ou une batterie à charger avec ladite alimentation.

6. Système de transfert d'alimentation sans fil selon la revendication 5, dans lequel ledit au moins un dispositif de commande de réglage comporte un circuit de détection pour détecter la qualité de la résonance à chacune des antennes de la bobine et commuter entre les antennes secondaires jusqu'à ce que l'impédance la mieux adaptée soit obtenue.

7. Système de transfert d'alimentation sans fil selon la revendication 6, dans lequel le dispositif de commande de réglage de l'antenne du récepteur et de l'émetteur est configuré pour choisir la bobine secondaire fournissant la réception d'alimentation la plus élevée.

8. Système de transfert d'alimentation sans fil selon la revendication 6, dans lequel l'émetteur et le récepteur sont dotés d'un moyen de communication sans fil permettant de choisir la configuration d'antenne de l'émetteur et du récepteur offrant l'efficacité de transfert la plus élevée.

9. Système de transfert d'alimentation sans fil selon la revendication 5, dans lequel une première de ces antennes est configurée pour être connectée à une alimentation électrique située dans une installation stationnaire au niveau du sol et la seconde de ces antennes est configurée pour être située dans un véhicule en mouvement, tel qu'une voiture, et connectée à une batterie rechargeable, la seconde antenne étant configurée pour être positionnée dans le véhicule à une hauteur prédéterminée au-dessus du niveau du sol.

10. Système de transfert d'alimentation sans fil selon la revendication 5, dans lequel une première de ces antennes est configurée pour être connectée à une alimentation électrique située dans une installation sous-marine stationnaire et la seconde de ces antennes est configurée pour être située dans un navire sous-marin fonctionnant à l'électricité et connectée à une batterie rechargeable dans le navire, le navire étant configuré pour se mettre dans une position prédéterminée par rapport à la première antenne.

11. Système de transfert d'alimentation sans fil selon la revendication 5, dans lequel une première de ces antennes est configurée pour être connectée à une alimentation électrique située dans une installation fixe et la seconde de ces antennes est configurée pour être située dans un appareil électronique mobile et être connectée à une batterie rechargeable dans l'appareil, l'installation comportant une surface pour placer l'appareil dans une position prédéterminée par rapport à la première antenne.
